# EUROPÄISCHE PATENTANMELDUNG

(11) **EP 3 893 431 A1**
(43) Veröffentlichungstag der Anmeldung: **13.10.2021**
(21) Anmeldenummer: 20168219.2
(22) Anmeldetag: 06.04.2020
(51) Int. Cl.: H04L 9/32, H03K 19/17756, G06F 21/76

(54) **AUTHENTIFIZIERUNG EINER KONFIGURATION EINER FELDPROGRAMMIERBAREN LOGIKGATTER-ANORDNUNG**

(71) Anmelder: Siemens Aktiengesellschaft, 80333 München (DE)
(72) Erfinder: De Santis, Fabrizio, 80634 München (DE); Dichtl, Markus, 89231 Neu-Ulm (DE); Sel, Tolga, 81379 München (DE)

(57) **Zusammenfassung**

Die Erfindung betrifft ein computerimplementiertes Verfahren zur Authentifizierung eines Konfigurationsdatensatzes einer feldprogrammierbaren Logikgatter-Anordnung umfassend mehrere Schritte. Sie betrifft auch einen elektronischen Schaltkreis mit einer feldprogrammierbaren Logikgatter-Anordnung, ein Computerprogrammprodukt und ein computerlesbares Speichermedium. Zunächst erfolgt das Bereitstellen des Konfigurationsdatensatzes für die feldprogrammierbare Logikgatter-Anordnung. Der Konfigurationsdatensatz wird dann in wenigstens zwei Teile zerlegt, wobei der erste Teil in einem ersten Teilkonfigurationsdatensatz gespeichert wird und der zweite Teil in einem zweiten Teilkonfigurationsdatensatz gespeichert wird. Es wird wenigstens ein erster Integritätswert des ersten Teilkonfigurationsdatensatzes erzeugt. Es wird wenigstens ein zweiter Integritätswert des zweiten Teilkonfigurationsdatensatzes durch eine kryptographische Prüfsumme abhängig von den vorhergehenden Teilkonfigurationsdatensätzen und/oder den vorhergehenden Integritätswerten erzeugt. Wenigstens einer der Teilkonfigurationsdatensätze mit dem wenigstens einen zugeordneten Integritätswert wird in ein Authentifizierungsmodul übertragen. Anschließend wird ein Prüfergebnis für die Authentizität des wenigstens einen Teilkonfigurationsdatensatzes anhand des zugeordneten Integritätswerts ermittelt, wobei das Prüfergebnis durch das Authentifizierungsmodul ermittelt wird.

## Beschreibung

Die vorliegende Erfindung betrifft ein computerimplementiertes Verfahren zur Authentifizierung einer Konfiguration einer feldprogrammierbaren Logikgatter-Anordnung, einen entsprechenden elektronischen Schaltkreis, ein Datenverarbeitungsprogramm sowie ein computerlesbares Speichermedium.

Eine feldprogrammierbare Logikgatter-Anordnung (englisch: "Field Programmable Gate Array"), FPGA, auch als feldprogrammierbares Gate-Array bezeichnet, erlaubt eine schnelle Signalverarbeitung und die flexible Änderung der mit dem FPGA realisierten Schaltung. Ein FPGA enthält eine Vielzahl von Logikgattern, deren Funktionalität zum Beispiel über Umsetzungstabellen (englisch: "Lookup Tables") definiert ist.

Die Funktionalität des FPGA wird beispielsweise durch das Laden einer extern gespeicherten Konfigurationsdatei, die auch als Bitstream bezeichnet wird, festgelegt. Die durch den geladenen Bitstream festgelegte laufende Konfiguration des FPGA kann jedoch zur Laufzeit verändert oder manipuliert werden. Insbesondere kann ein Angreifer die Konfiguration des FPGA während der Ausführung kritischer oder sicherheitsrelevanter Operationen stören, beispielsweise um eine Sicherheitsüberprüfung zu umgehen oder Information über einen geheimen Schlüssel zu gewinnen.

Es ist bekannt, jedem Teilkonfigurationsdatensatz zusätzliche Identitätsparameter, wie ein Identitätswert für jeden Teilkonfigurationsdatensatz oder einen fortlaufenden Zählwert (Counterwert), zuzuordnen. Nachteilig vergrößert sich durch diese Identitätsparameter, welche den Teilkonfigurationsdatensätzen zugeordnet werden, aber die Größe des einzelnen Teilkonfigurationsdatensatzes. Weiterhin ist es für ein Überprüfen der Identitätsparameter nötig, dass der FPGA jeden dieser Identitätsparameter überprüft, also beispielsweise für den Zählwert einen Vergleichswert selbst bereitstellt und vergleicht. Nachteilig erfordert dies eine erhöhte Komplexität des FPGAS, da diese Überprüfungsberechnung implementiert werden muss. Auch das Überprüfen selbst benötigt nachteilig relativ lange Zeit pro Überprüfen eines Teilkonfigurationsdatensatzes bei einer unvorteilhaften Implementierung der Überprüfungsberechnungslogik.

Aufgabe der vorliegenden Erfindung ist es, die genannten Nachteile zu überwinden. Insbesondere ist es Aufgabe der Erfindung die Authentizität des Konfigurationsdatensatzes und der Teilkonfigurationsdatensätze effizient, schnell, sicher und weniger komplex durchzuführen.

Die Aufgabe wird mit einem computerimplementierten Verfahren gemäß Anspruch 1, einem elektronischen Schaltkreis gemäß Anspruch 11, einem Computerprogrammprodukt gemäß Anspruch 14 und einem computerlesbaren Speichermedium gemäß Anspruch 15 gelöst.

Das erfindungsgemäße computerimplementierte Verfahren zur Authentifizierung eines Konfigurationsdatensatzes einer feldprogrammierbaren Logikgatter-Anordnung umfasst mehrere Schritte. Zunächst erfolgt das Bereitstellen des Konfigurationsdatensatzes für die feldprogrammierbare Logikgatter-Anordnung. Der Konfigurationsdatensatz wird dann in wenigstens zwei Teile zerlegt, wobei der erste Teil in einem ersten Teilkonfigurationsdatensatz gespeichert wird und der zweite Teil in einem zweiten Teilkonfigurationsdatensatz gespeichert wird. Es wird wenigstens ein erster Integritätswert des ersten Teilkonfigurationsdatensatzes erzeugt. Es wird wenigstens ein zweiter Integritätswert des zweiten Teilkonfigurationsdatensatzes durch eine kryptographische Prüfsumme abhängig von den vorhergehenden Teilkonfigurationsdatensätzen und/oder den vorhergehenden Integritätswerten erzeugt. Wenigstens einer der Teilkonfigurationsdatensätze mit dem zugeordneten Integritätswert wird in ein Authentifizierungsmodul übertragen.

Anschließend wird ein Prüfergebnis für die Authentizität des wenigstens einen Teilkonfigurationsdatensatzes anhand des zugeordneten wenigstens einen Integritätswerts ermittelt, wobei das Prüfergebnis durch das Authentifizierungsmodul ermittelt wird.

Der wenigstens eine Integritätswert eines Teilkonfigurationsdatensatzes zur Überprüfung der Authentizität kann in einem bereits in der feldprogrammierbaren Logikgatter-Anordnung vorhandenen Authentifizierungsmodul oder in einem eigens für diesen Zweck ausgelegten Authentifizierungsmodul in der feldprogrammierbaren Logikgatter-Anordnung erfolgen.

Ein erfindungsgemäßer elektronischer Schaltkreis mit einer feldprogrammierbaren Logikgatter-Anordnung umfasst eine Recheneinheit, die dazu eingerichtet ist, einen Konfigurationsdatensatz in wenigstens zwei Teilkonfigurationsdatensätze aufzuteilen, wenigstens einen ersten Integritätswert eines ersten Teilkonfigurationsdatensatzes zu erzeugen und wenigstens einen zweiten Integritätswert eines zweiten Teilkonfigurationsdatensatzes durch eine kryptographische Prüfsumme abhängig von den vorhergehenden Teilkonfigurationsdatensätzen und/oder den Integritätswerten zu erzeugen. Sie umfasst weiterhin ein Authentifizierungsmodul, das dazu eingerichtet ist, die Authentizität wenigstens eines Teilkonfigurationsdatensatzes anhand des wenigstens einen zugeordneten Integritätswerts zu prüfen.

Alternativ oder zusätzlich kann der Konfigurationsdatensatz bereits aufgeteilt in Teilkonfigurationsdatensätze in den erfindungsgemäßen elektronischen Schaltkreis geführt werden.

Der elektronische Schaltkreis kann als ein Gesamtmodul oder als mehrere, insbesondere wenigstens zwei, Submodule ausgeführt sein.

Der elektronische Schaltkreis ist insbesondere ein integrierter Schaltkreis. Insbesondere ist der elektronische Schaltkreis als Ein-Chip-System, SoC, ausgeführt, welches die feldprogrammierbare Logikgatter-Anordnung und das Prozessorsystem umfasst. Der elektronische Schaltkreis kann ebenfalls als Konfiguration in dem programmierbaren Bereich der feldprogrammierbaren Logikgatter-Anordnung ausgeführt sein.

Ein erfindungsgemäßes Computerprogrammprodukt, welches dazu eingerichtet ist, mit Befehlen, welche bei Ausführung des Datenverarbeitungsprogramms durch eine Datenverarbeitungseinrichtung die Datenverarbeitungseinrichtung dazu veranlassen das erfindungsgemäße Verfahren durchzuführen.

Ein erfindungsgemäßes Computerlesbares Speichermedium umfasst ein Datenverarbeitungsprogramm gemäß dem erfindungsgemäßen Computerprogrammprodukt.

Die Teilkonfigurationsdatensätze sind unmittelbar aufeinanderfolgende Teilkonfigurationsdatensätze.

Bei der feldprogrammierbaren Logikgatter-Anordnung handelt es sich um ein FPGA, welches auch als feldprogrammierbares Gate-Array (Englisch: "Field Programmable Gate Array") bezeichnet wird.

Der Konfigurationsdatensatz entspricht insbesondere einer auf das FPGA beziehungsweise eine Speichereinheit des FPGA geladene externe Konfigurationsdatei, die auch als Bitstream bezeichnet werden kann.

Unter einer "Prüfsumme" kann im Zusammenhang mit der Erfindung beispielsweise eine kryptographische Prüfsumme oder eine kryptographische Signatur oder kryptographischer Hash bzw. Hashwert verstanden werden, die insbesondere mittels einer kryptographischen Hashfunktion über einen Datensatz und/oder Daten und/oder einem Teilbereich eines Datenblocks (z. B. der Block-Header eines Blocks einer Blockkette oder Datenblock-Header eines Datenblocks des verteilten Datenbanksystems) und/oder über mehrere Datenblöcke gebildet oder berechnet werden. Bei einer Prüfsumme kann es sich insbesondere um eine Prüfsumme/n oder Hashwert/e eines Hash-Baumes (z. B. Merkle Baum) handeln. Weiterhin kann darunter insbesondere auch eine digitale Signatur oder ein kryptographischer Nachrichtenauthentisierungscode verstanden werden. Mittels der Prüfsummen kann beispielsweise auf unterschiedlichen Ebenen des Datenbanksystems ein kryptographischer Schutz/Manipulationsschutz für die Konfigurationsdaten der feldprogrammierbaren Logikgatter-Anordnung und die darin gespeicherten Daten realisiert werden.

Als Verkettungsprüfsumme kann beispielsweise eine verkettete Prüfsumme oder eine Datenblockprüfsumme eines Datenblocks verwendet werden, um einen neuen Datenblock mit einem Datenblock der verketteten Teilkonfigurationsdatensätze zu verketten. Die verketteten Teilkonfigurationsdatensätze können als verketteter Datenblock angesehen werden.

Unter "Bereitstellen" kann im Zusammenhang mit der Erfindung beispielsweise ein Laden oder ein Speichern einer Konfiguration einer feldprogrammierbaren Logikgatter-Anordnung verstanden werden.

Der elektronische Schaltkreis ist insbesondere als Prozessor ausgestaltet. Der elektronische Schaltkreis kann auch als State-Machine und/oder Soft-CPU und/oder gesonderter kryptographischer Implementierungen ausgestaltet sein.

Unter einem Prozessor kann im Zusammenhang mit der Erfindung beispielsweise eine Maschine oder eine elektronische Schaltung verstanden werden. Die elektronische Schaltung umfasst beispielsweise einen Prozessor und ein gesondertes Modul. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder ein Krypto-Prozessor oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Das Verkettungsprinzip der Erzeugung der kryptographischen Prüfsumme kann analog zu einer Blockkette verstanden werden: es werden verschiedene Teilkonfigurationsdatensätze verkettet, um die Integrität aller bisherigen Teilkonfigurationsdatensätze sicherzustellen.

Der Erfindung liegt die Idee zugrunde, einzelne Teilkonfigurationsdatensätze kryptographisch als Integritätswert zu verketten, ähnlich einer Blockkette, um die Integrität der vorhergehenden Teilkonfigurationsdatensätze, und damit die Integrität des gesamten Konfigurationsdatensatzes, ohne zusätzliche weitere Identitätsparameter sicherzustellen.

Vorteilhaft werden mit dem erfindungsgemäßen Verfahren sowohl die Reihenfolge der Teilkonfigurationsdatensätze als auch die Zusammengehörigkeit der Teilkonfigurationsdatensätze ohne zusätzliche Identitätsparameter, wie insbesondere einem Zählwert und eine Identifikationsnummer der Teilkonfigurationsdatensätze, abgesichert. Die Absicherung erfolgt insbesondere gegen Manipulation eines Angreifers.

In einer vorteilhaften Ausgestaltung und Weiterbildung der Erfindung werden die Teilkonfigurationsdatensätze verschlüsselt.

In einer weiteren vorteilhaften Ausgestaltung und Weiterbildung der Erfindung erfolgt ein Verschlüsseln der Teilkonfigurationsdatensätze vor oder nach dem Erzeugen des ersten Integritätswerts, des zweiten Integritätswerts oder eines nachfolgenden Integritätswerts. Für den Fall, dass das Verschlüsseln erst nach dem Erzeugen des Integritätswerts erfolgt, wird in anderen Worten der Integritätswert über das entschlüsselte Teilkonfigurationsdatensatz berechnet. Es ist ebenso möglich, dass der Integritätswert über alle vorherigen Teilkonfigurationsdatensätze, insbesondere verschlüsselte oder entschlüsselte Teilkonfigurationsdatensätze berechnet wird. Es ist ebenso denkbar, dass der Integritätswert über alle vorherigen verschlüsselten oder entschlüsselten Teilkonfigurationsdatensätzen und über alle vorhergehenden Integritätswerte berechnet wird.

In einer weiteren vorteilhaften Ausgestaltung und Weiterbildung der Erfindung werden bei Vorliegen eines positiven Prüfergebnisses der Authentizität folgende Schritte durchgeführt. Der Teilkonfigurationsdatensatz wird in einem Entschlüsselungsmodul entschlüsselt. Der Teilkonfigurationsdatensatz wird an eine Speichereinheit der feldprogrammierbaren Logikgatteranordnung übertragen. Vorteilhaft wird so erreicht, dass nach einem positiven Prüfergebnis der Teilkonfigurationsdatensatz in die Speichereinheit der feldprogrammierbare waren Logikgatter-Anordnung übertragen wird. Da dies nur nach dem positiven Prüfergebnis erfolgt, ist das Übertragen vorteilhaft gegen Manipulationen durch einen Angreifer geschützt. Es ist auch möglich, dass nach einer positiven Überprüfung der Rekonfigurationslogikbereich der feldprogrammierbaren Logikgatter-Anordnung direkt durch die Rekonfigurationsschnittstelle der feldprogrammierbaren Logikgatter-Anordnung konfiguriert wird. In anderen Worten wird der Teilkonfigurationsdatensatz nach dem Überprüfung der Authentizität mit einem positiven Prüfergebnis nicht in der Speichereinheit gespeichert, sondern direkt übertragen.

In einer weiteren vorteilhaften Ausgestaltung und Weiterbildung der Erfindung erfolgt nach dem Übertragen des Teilkonfigurationsdatensatzes an eine Speichereinheit der feldprogrammierbaren Logikgatter-Anordnung ein Laden des Teilkonfigurationsdatensatzes in die feldprogrammierbare Logikgatter-Anordnung. Dabei wird wenigstens ein Teilkonfigurationsdatensatz an eine Rekonfigurationsschnittstelle der feldprogrammierbaren Logikgatter-Anordnung übertragen. Ein Konfigurationslogikbereich der feldprogrammierbaren Logikgatter-Anordnung wird aus der Rekonfigurationsschnittstelle konfiguriert. Der Konfigurationslogikbereich, auch Rekonfigurationslogikbereich genannt, kann als ein Bereich oder als wenigstens zwei Bereiche ausgestaltet sein.

In einer weiteren vorteilhaften Ausgestaltung und Weiterbildung der Erfindung erfolgt das Entschlüsseln der Teilkonfigurationsdatensätze nach dem Prüfen der Authentizität oder während des Prüfens der Authentizität. Erfolgt das Prüfen der Authentizität und das Entschlüsseln der Authentizität parallel, heißt das in anderen Worten, dass ein erster Teilkonfigurationsdatensatz, der bereits mit einem positiven Prüfergebnis auf an Authentizität überprüft wurde in dem Entschlüsselungsmodul entschlüsselt wird, während in dem Authentifizierungsmodul ein zweiter Teilkonfigurationsdatensatz auf Authentizität überprüft wird. Vorteilhaft können somit zwei Teilkonfigurationsdatensätze parallel überprüft werden, was das Verfahren beschleunigt.

In einer weiteren vorteilhaften Ausgestaltung und Weiterbildung der Erfindung wird der Rekonfigurationslogikbereich von einer Firewall geschützt. Der Vorteil einer Firewall ist, dass nur authentisierte Teilkonfigurationsdatensätze geladen werden können und somit eine nicht autorisierte Änderung der Konfiguration der feldprogrammierbaren Logikgatter-Anordnung nicht durchgeführt werden kann. Ein weiterer Vorteil des Einsatzes einer Firewall ist, dass ein neu hineingeladenes Modul nur in Betrieb genommen wird, falls die Konfiguration vollständig und erfolgreich war. Würde insbesondere ein letzter Teilkonfigurationsdatensatz nicht authentifiziert werden können, könnte der Konfigurationslogikbereich ohne den Einsatz einer Firewall unvollständig rekonfiguriert werden. Die Funktionalität der feldprogrammierbaren Logikgatter-Anordnung wäre dann nicht mehr gewährleistet. Ein derart unvollständiges Konfigurieren kann vorteilhaft durch eine Firewall vermieden werden.

In einer weiteren vorteilhaften Ausgestaltung und Weiterbildung der Erfindung wird der Rekonfigurationslogikbereich nach einem positiven Prüfergebnis der Authentizität von der Firewall freigegeben. Vorteilhaft wird die Sicherheit der Rehkonfiguration der programmierbaren Logikgatter-Anordnung zusätzlich erhöht.

In einer weiteren vorteilhaften Ausgestaltung und Weiterbildung der Erfindung wird die Prüfung der Authentizität in dem Authentizitätsmodul durch symmetrische kryptographische Verfahren und/oder asymmetrische kryptographische Verfahren, insbesondere auch durch post-quantum kryptographische Verfahren, durchgeführt.

In einer weiteren vorteilhaften Ausgestaltung und Weiterbildung der Erfindung wird das Entschlüsseln in dem Entschlüsselungsmodul durch symmetrische kryptographische Verfahren und/oder asymmetrische kryptographische Verfahren durchgeführt.

In einer vorteilhaften Ausgestaltung und Weiterbildung der Erfindung umfasst der elektronische Schaltkreis ein Entschlüsselungsmodul, das geeignet ist, den Teilkonfigurationsdatensatz vor oder nach dem Prüfen der Authentizität mit einem positiven Prüfergebnis der Authentizität, also einer anerkannten Authentizität, zu entschlüsseln.

In einer weiteren vorteilhaften Ausgestaltung und Weiterbildung der Erfindung umfasst der elektronische Schaltkreis mit der feldprogrammierbaren Logikgatter-Anordnung eine Rekonfigurationsschnittstelle, wobei ein Rekonfigurationslogikbereich aus der Rekonfigurationsschnittstelle beschreibbar ist.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- Figur 1: eine feldprogrammierbare Logikgatter-Anordnung und einen Konfigurationsdatensatz;
- Figur 2: eine feldprogrammierbare Logikgatter-Anordnung mit einer Firewall um einen Rekonfigurationslogikbereich;
- Figur 3: ein Ablaufdiagramm einer beispielhaften Ausführungsform eines Verfahrens zur Authentifizierung eines Konfigurationsdatensatzes und Rekonfigurieren einer feldprogrammierbare Logikgatter-Anordnung.

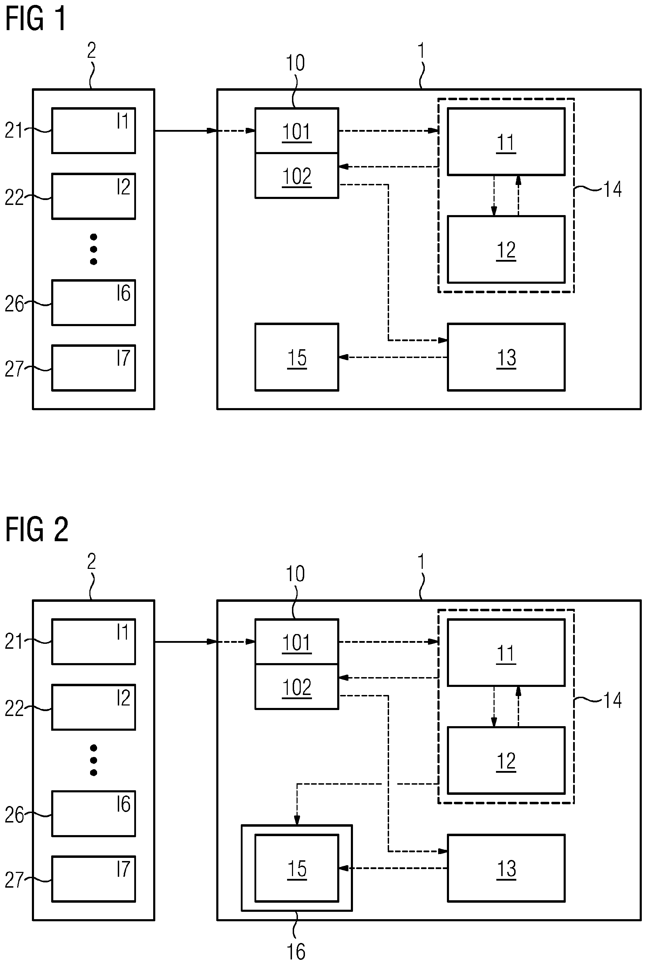

Figur 1 zeigt eine feldprogrammierbare Logikgatter-Anordnung 1 mit einer Speichereinheit 10, einem Authentifizierungsmodul 11, einem Entschlüsselungsmodul 12 und einer Rekonfigurationsschnittstelle 13. Das Authentifizierungsmodul 11 und das Entschlüsselungsmodul 12 sind in diesem Bespiel in einer authentifizierenden Entschlüsselungseinheit 14 zusammengefasst. Die Speichereinheit 10 umfasst einen ersten Speicherbereich 101 und einen zweiten Speicherbereich 102.

Die feldprogrammierbare Logikgatter-Anordnung 1 umfasst typischerweise mehrere Rekonfigurationslogikbereiche 15. Je nach Anwendung sind diese Rekonfigurationslogikbereiche 15 frei definierbar. Vereinfachend wird in diesem Beispiel aber nur ein Rekonfigurationslogikbereich 15 gezeigt.

Der Rekonfigurationslogikbereich 15 kann während der Laufzeit der feldprogrammierbare Logikgatter-Anordnung 1 rekonfiguriert, in anderen Worten verändert, werden. Dies wird auch partielle Rekonfiguration genannt. Unter der Laufzeit der feldprogrammierbaren Logikgatter-Anordnung 1 kann insbesondere ein Zeitraum nach dem Laden einer ersten Konfigurationsdatei auf die feldprogrammierbare Logikgatter-Anordnung 1 verstanden werden. Es beschreibt also ein Zeitraum, zu dem die feldprogrammierbare Logikgatter-Anordnung 1 gemäß der durch eine initiale Konfigurationsdatei festgelegten Konfiguration verwendet werden kann. Insbesondere werden in diesem Ausführungsbeispiel während der Laufzeit neue Konfigurationsdatensätze 2 in die feldprogrammierbare Logikgatter-Anordnung 1 geladen.

Figur 1 zeigt einen solchen neuen Konfigurationsdatensatz 2 zum Rekonfigurieren während der Laufzeit. Das im Folgenden näher erläuterte Verfahren kann aber ebenso auf eine initiale Konfiguration einer feldprogrammierbaren Logikgatter-Anordnung 1 angewendet werden. Der Konfigurationsdatensatz 2 ist typischerweise größer als die Speichergröße der Speichereinheit 10, nämlich insbesondere 100 kB bis 10000 kB groß. Der Speicherbereich umfasst insbesondere eine Speichergröße in einem Bereich von 100 kB bis 1000 kB, insbesondere 256 kB. Diese Speicherwerte können je nach Technologiefortschritt, insbesondere nach dem Mooreschen Gesetz, variieren. Beispielsweise verfügt ein Xilinx Zynq Z-7007S FPGA über 256 kB Block RAM (BRAM). Diese Speicherwerte können aber auch von anderen internen Anwendungen des FPGA genutzt werden, sodass der brauchbare interne Speicher noch geringer ausfallen könnte.

Der Konfigurationsdatensatz 2 wird daher in Teilkonfigurationsdatensätze, engl. partielle Bitstreams, aufgeteilt, welche insbesondere nacheinander, in die Speichereinheit 10 geladen werden. Der Konfigurationsdatensatz in diesem Beispiel wird in sieben Teilkonfigurationsdatensätze aufgeteilt. Diese Anzahl ist für eine übersichtliche Darstellung im einstelligen Bereich gewählt. Typischerweise wird ein Konfigurationsdatensatz 2 in 50 bis 1000 Teilkonfigurationsdatensätze aufgeteilt. Die Anzahl der Teilkonfigurationsdatensätze ist abhängig von der Größe der Konfigurationsregion und dem verfügbaren internen Speicher im der feldprogrammierbaren Logikgatter-Anordnung 1.

Zu jedem einzelnen Teilkonfigurationsdatensatz wird ein Integritätswert erzeugt. Die feldprogrammierbare Logikgatter-Anordnung 1 kann diesen Integritätswert in dem Authentifizierungsmodul 11 überprüfen. Vorteilhaft können so Manipulationen der Teilkonfigurationsdatensätze erkannt werden.

Das Erzeugen des ersten Integritätswerts I1 zu dem ersten Teilkonfigurationsdatensatz 21 erfolgt insbesondere basierend auf einem einmaligen Initialisierungswert, auch IV oder Nonce genannt. Der Initialisierungswert kann ein Zufallswert, ein Zählwert (engl. Counter) oder ein Mischwert aus beiden sein. Das Erzeugen des zweiten Integritätswerts erfolgt durch eine kryptographische Prüfsumme abhängig von dem ersten Integritätswert I1 und/oder dem ersten Teilkonfigurationsdatensatz 21. Die dritten Integritätswerte I3 bis siebten Integritätswerte I7 werden durch eine kryptographische Prüfsumme abhängig von dem ersten Integritätswert I1 bis zum vorhergehenden, für den siebten Teilkonfigurationsdatensatz 27 also bis zum sechsten Integritätswert I6 und/oder abhängig von dem ersten Teilkonfigurationsdatensatz 21 bis zum sechsten Teilkonfigurationsdatensatz 26 erzeugt. In anderen Worten werden die Teilkonfigurationsdatensätze mittels der Integritätswerte miteinander verkettet, ähnlich einer Blockkette. Vorteilhaft sichert dieses Verketten die Reihenfolge der Teilkonfigurationsdatensätze und die Zusammengehörigkeit der Teilkonfigurationsdatenätze auf effiziente Weise ab. Es ist vorteilhaft nicht nötig, jedem Teilkonfigurationsdatensatz zusätzliche Identitätsparameter, wie ein Identitätswert für jeden Teilkonfigurationsdatensatz oder einen fortlaufenden Zählwert (Counterwert), zuzuordnen. Die Größe des einzelnen Teilkonfigurationsdatensatzes vergrößert sich durch das Zuordnen des Integritätswertes vorteilhaft kaum. Insbesondere wird weniger Speicherbedarf als für zusätzliche Identitätsparameter benötigt. Es ist vorteilhaft nicht nötig, die vorherigen Teilkonfigurationsdatensatz und deren Integritätswerte auszuwerten, um einen bestimmten Teilkonfigurationsdatensatz auf Authentizität zu überprüfen. Es wird lediglich der Integritätswert des zu überprüfenden Teilkonfigurationsdatensatzes überprüft, um die Integrität und Authentizität desselben zu überprüfen.

Die Teilkonfigurationsdatensätze können nach oder vor dem Erzeugen des zugehörigen Integritätswerts verschlüsselt werden. Das Verschlüsseln des Teilkonfigurationsdatensatzes kann symmetrisch, insbesondere mittels Block-Chiffre, Strom-Chiffre oder eines AEAD-Moduls (engl.: authenticated encryption with associcated data AEAD), oder asymmetrisch, insbesondere mittels einer "öffentlicher-Schlüssel-Verschlüsselung" (engl.: public-key encryption), erfolgen.

Die Teilkonfigurationsdatensätze mit dem jeweils zugehörigen Integritätswert werden nach dem Erzeugen insbesondere in die Speichereinheit 10, insbesondere in den ersten Speicherbereich 101, übertragen. Anschließend werden die Teilkonfigurationsdatenätze in die authentifizierende Entschlüsselungseinheit 14 übertragen. Es ist ebenfalls möglich, einzelne Teilkonfigurationsdatensätze direkt in die authentifizierende Entschlüsselungseinheit 14 zu übertragen. Die Teilkonfigurationsdatensätze werden insbesondere nacheinander in die authentifizierende Entschlüsselungseinheit 14 übertragen.

Das Verfahren zum Authentifizieren soll nun am siebten Teilkonfigurationsdatensatz 27 näher erläutert werden. Der siebte Teilkonfigurationsdatensatz 27 wird in das Authentifizierungsmodul 11 übertragen Dort wird ein Prüfergebnis für die Authentizität des siebten Teilkonfigurationsdatensatzes 27 anhand des siebten Integritätswertes I7 ermittelt. Für den Fall, dass keine Manipulation oder Eingriff durch einen Angreifer stattgefunden hat, wird der Integritätswert I7 als authentisch anerkannt. Somit liegt ein positives Prüfergebnis vor. Vorteilhaft muss hierfür ausschließlich der siebte Integritätswert I7 überprüft werden. Es ist nicht nötig zusätzliche Identitätsparamater, wie insbesondere einen Zählwert, in dem Authentifizierungsmodul 11 zu berechnen und abzugleichen. Vorteilhaft wird durch das Einsetzen des Integritätswertes die Effizienz des Überprüfens der Authentizität deutlich erhöht.

Es ist vorteilhaft auch möglich, jedem Teilkonfigurationsdatensatz ein Integritätswert anzuhängen. So kann beispielsweise nach jedem Teilkonfigurationsdatensatz 21, 22, 26, 27 die Integrität I1, I2, I6, I7 validiert werden. Wird beispielsweise der erste Teilkonfigurationsdatensatz 21 in die feldprogrammierbare Logikgatter-Anordnung 1 übertragen, wird anhand des Integritätswert I1 die Authentizität des ersten Teilkonfigurationsdatensatz 21 überprüft, also validiert. Wird der zweite Teilkonfigurationsdatensatz 22 in die feldprogrammierbare Logikgatter-Anordnung 1 übertragen, wird die Authentizität anhand des ersten Integritätswerts I1 und des zweiten Integritätswerts I2 überprüft. Wird der dritte Teilkonfigurationsdatensatz 23 in die feldprogrammierbare Logikgatter-Anordnung 1 übertragen, wird die Authentizität anhand des ersten Integritätswerts I1, des zweiten Integritätswerts I2 und des dritten Integritätswert I3 überprüft (eine Kette aus allen vorhergegangen Teilkonfigurationsdatensätzen). Alternativ ist es auch möglich, den dritten Teilkonfigurationsdatensatz 23 in die feldprogrammierbare Logikgatter-Anordnung 1 zu übertragen und die Authentizität anhand des zweiten Integritätswerts I2 und des dritten Integritätswert I3 zu überprüfen, in anderen Worten eine Kette aus den letzten zwei Teilkonfigurationsdatensätzen zu bilden.

Nach dem Überprüfen der Authentizität mit einem positiven Prüfergebnis wird der siebte Teilkonfigurationsdatensatz 27 an das Entschlüsselungsmodul 12 übergeben. Dort wird der siebte Teilkonfigurationsdatensatz 27 entschlüsselt.

Das Entschlüsseln kann symmetrisch, mittels eines AEAD-Moduls oder einer MAC-Funktion (engl. Message-Authentication-Code; MAC) oder asymmetrisch, mittels eines Signaturverfahrens mit öffentlichem Schlüssel (engl.: public-key), erfolgen.

Vorteilhaft kann ein Teilkonfigurationsdatensatz entschlüsselt werden, während ein anderer Teilkonfigurationsdatensatz auf Authentizität überprüft wird. Vorteilhaft wird das Verfahren somit zeitlich kürzer, wodurch eine Rekonfiguration der feldprogrammierbaren Logikgatter-Anordnung schneller durchgeführt werden kann. Es ist ebenso möglich, dass ein Teilkonfigurationsdatensatz zuerst entschlüsselt wird und anschließend auf Authentizität überprüft wird.

Nach erfolgreichem Überprüfen der Authentizität und Entschlüsseln wird der siebte Teilkonfigurationsdatensatz 27 in entschlüsselter Form in den zweiten Speicherbereich 102 der Speichereinheit 10 übertragen und gespeichert. Aus dem zweiten Speicherbereich 102 wird der siebte Teilkonfigurationsdatensatz 27 geladen und in die Rekonfigurationsschnittstelle 13 übertragen. Als Rekonfigurationsschnittstelle 13 können Internal-Configuration Access Ports (ICAP), Processor Configuration Access Port (PCAP) auf Xilinx FPGA eingesetzt werden. Von der Rekonfigurationsschnittstelle 13 aus wird der Rekonfigurationslogikbereich 15 beschrieben. Der Rekonfigurationsbereich 15 kann ein gesamter Gatterbereich einer feldprogrammierbaren Logikgatteranordnung oder nur ein Teilbereich der feldprogrammierbaren Logikgatteranordnung sein.

Es ist möglich, die Teilkonfigurationsdatensätze einzeln nacheinander in die Rekonfigurationsschnittstelle 13 zu laden. Es ist ebenso möglich, einzelne Teilkonfigurationsdatensätze zu einem Konfigurationsdatensatz zusammenzufassen und gesammelt in die Rekonfigurationsschnittstelle 13 zu laden.

Für den Fall, dass das Überprüfen der Authentizität ein negatives Prüfergebnis ermittelt, wird die Rekonfiguration der feldprogrammierbaren Logikgatteranordnung 1 abgebrochen. Die Speichereinheit 10 wird zurückgesetzt, mit Zufallszahlen überschrieben oder in einen sicheren Zustand versetzt. Weiterhin wird eine Meldung, insbesondere ein Fehleralarm, ausgegeben. Weiterhin wird der Rekonfigurationslogikbereich 15, falls bereits mit Teilkonfigurationsdatensätzen beschrieben, zurückgesetzt. Die Firewall 16 wird nicht deaktiviert, sodass die Logik in Rekonfigurationslogikbereich 15 das Gesamtsystem der feldprogrammierbaren Logikgatter-Anordnung 1 nicht stören kann.

Figur 2 zeigt eine feldprogrammierbare Logikgatteranordnung 1 und einen Konfigurationsdatensatz 2. Die feldprogrammierbare Logikgatteranordnung 1 umfasst dieselben Einheiten wie die feldprogrammierbare Logikgatteranordnung 1 des ersten Ausführungsbeispiels. Zusätzlich weist die feldprogrammierbare Logikgatteranordnung 1 dieses zweiten Ausführungsbeispiels eine Firewall 16 auf, welche den Rekonfigurationslogikbereich 15, also den bereits rekonfigurierten Teil des Logikgatters, abtrennt. Die Freigabe dieses Bereichs erfolgt insbesondere ersten dann, wenn ein Überprüfen der Authentizität des letzten Teilkonfigurationsdatensatzes, in diesem Beispiel des siebten Teilkonfigurationsdatensatzes 27, mit einem positiven Prüfergebnis abgeschlossen ist. Vorteilhaft wird so sichergestellt, dass der rekonfigurierte Bereich erst dann eingesetzt wird, wenn die Authentizität des gesamten Konfigurationsdatensatzes 2 gewährleistet wird.

Für den Fall, dass eine sehr hohe Sicherheitsanforderung an das Rekonfigurieren der feldprogrammierbaren Logikgatteranordnung 1 gestellt wird, ist es auch möglich den Teilkonfigurationsdatensätzen zusätzlich zu den verketteten Integritätswerten Identitätsparameter zuzuweisen, um insbesondere die Gesamtzahl der Teilkonfigurationsdatensätze zu überprüfen.

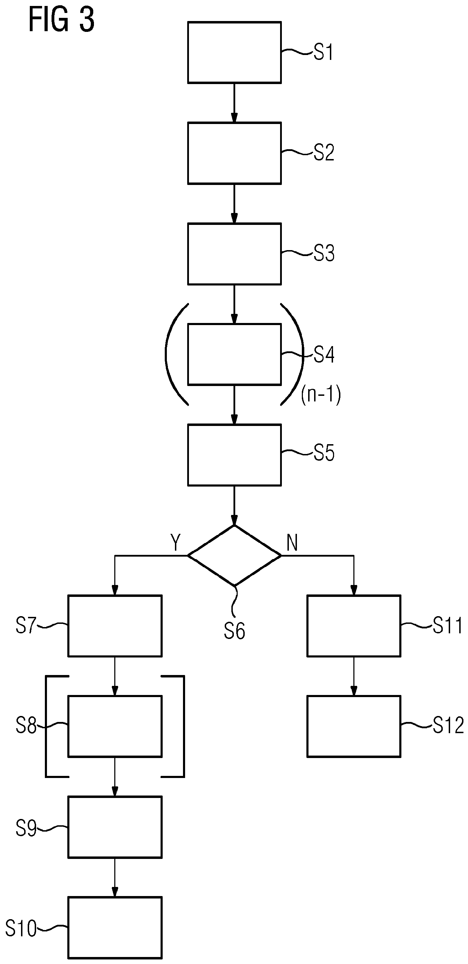

Figur 3 zeigt ein Ablaufdiagramm einer beispielhaften Ausführungsform eines Verfahrens zur Authentifizierung eines Konfigurationsdatensatzes und Rekonfigurieren einer feldprogrammierbare Logikgatter-Anordnung mit mehreren Schritten. In einem ersten Schritt S1 wird ein Konfigurationsdatensatzes bereitgestellt. In einem zweiten Schritt S2 wird der Konfigurationsdatensatz in Teilkonfigurationsdatensätze zerlegt. In einem dritten Schritt S3 wird ein erster Integritätswert I1 des ersten Teilkonfigurationsdatensatzes 21 erzeugt. In einem vierten Schritt S4 wird ein zweiter Integritätswert I2 zu einem zweiten Teilkonfigurationsdatensatz 22 abhängig von den vorhergehenden Integritätswerten und/oder den vorhergehenden Teilkonfigurationsdatensätzen durch eine kryptographische Prüfsumme erzeugt. Dieser Schritt wird für jeden Teilkonfigurationsdatensatz wiederholt. Insgesamt gibt es bei n Teilkonfigurationsdatensätzen also (n-1) Wiederholungen des vierten Schritts S4. Zu dem ersten und zweiten Ausführungsbeispiel mit insgesamt sieben Teilkonfigurationsdatensätzen wird der vierte Schritt S4 demnach sechs Mal ausgeführt. In einem fünften Schritt S5 wird wenigstens einer der Teilkonfigurationsdatensätze mit dem zugehörigen Integritätswert in ein Authentifizierungsmodul übertragen. In einem sechsten Schritt S6 wird ein Prüferergebnis für die Authentizität des wenigstens einen Teilkonfigurationsdatensatzes anhand des zugeordneten Integritätswerts durch das Authentifizierungsmodul ermittelt. In Abhängigkeit des Prüfergebisses folgen nun unterschiedliche Schritte.

War das Prüfergebnis positiv Y, also wurde die Authentizität anerkannt, folgt als siebter Schritt S7 das Entschlüsseln des Teilkonfigurationsdatensatzes. Der siebte Schritt S7 kann auch parallel zu dem sechsten Schritt S6 für einen weiteren Teilkonfigurationsdatensatz erfolgen. Es ist ebenso möglich, einen Teilkonfigurationsdatensatz zuerst zu Entschlüsseln und anschließend ein Prüfergebnis zur Authentizität zu ermitteln. In einem achten Schritt S8, wird eine Firewall freigegeben. Dieser achte Schritt S8 erfolgt optional nur dann, wenn eine Firewall vorhanden ist. In einem neunten Schritt S9 wird der Teilkonfigurationsdatensatz an eine Rekonfigurationsschnittstelle 13 der feldprogrammierbaren Logikgatter-Anordnung 1 übertragen. In einem zehnten Schritt S10 wird ein Rekonfigurationslogikbereich 15 der feldprogrammierbaren Logikgatter-Anordnung 1 aus der Rekonfigurationsschnittstelle 13 konfiguriert.

War das Prüfergebnis negativ N, also wurde eine Authentizität verneint, so wird der Konfigurationsprozess in einem elften Schritt 11 abgebrochen. In einem zwölften Schritt S12 wird eine Fehlermeldung erstellt und, falls vorhanden, die Firewall aufrechterhalten. Die ursprüngliche Konfiguration der feldprogrammierbaren Logikgatter-Anordnung 1 wird dann beibehalten und die feldprogrammierbaren Logikgatter-Anordnung 1 damit weiterbetrieben.

### Bezugszeichenliste

- 1: feldprogrammierbare Logikgatter-Anordnung
- 2: Konfigurationsdatensatz
- 10: Speichereinheit
- 11: Authentifizierungsmodul
- 12: Entschlüsselungsmodul
- 13: Rekonfigurationsschnittstelle
- 14: Authentifizierende Entschlüsselungseinheit
- 15: Rekonfigurationslogikbereich
- 16: Firewall
- 21: erster Teilkonfigurationsdatensatz
- 22: zweiter Teilkonfigurationsdatensatz
- 23: dritter Teilkonfigurationsdatensatz
- 26: sechster Teilkonfigurationsdatensatz
- 27: siebter Teilkonfigurationsdatensatz
- 101: erster Speicherbereich
- 102: zweiter Speicherbereich
- I1: erster Integritätswert
- I2: zweiter Integritätswert
- I3: dritter Integritätswert
- I6: sechster Integritätswert
- I7: siebter Integritätswert
- Y: positives Prüfergebnis
- N: negatives Prüfergebnis
- S1: Bereitstellen eines Konfigurationsdatensatzes
- S2: Zerlegen des Konfigurationsdatensatzes in Teilkonfigurationsdatensätze
- S3: Erzeugen eines ersten Integritätswerts des ersten Teilkonfigurationsdatensatzes
- S4: Erzeugen von weiteren Integritätswerten abhängig von den vorhergehenden Integritätswerten und/oder den vorhergehenden Teilkonfigurationsdatensätzen durch eine kryptographische Prüfsumme
- S5: Übertragen wenigstens eines der Teilkonfigurationsdatensätze mit Integritätswert in ein Authentifizierungsmodul
- S6: Ermitteln eines Prüfergebnisses für die Authentizität des wenigstens einen Teilkonfigurationsdatensatzes anhand des zugeordneten Integritätswerts durch das Authentifizierungsmodul
- S7: Entschlüsseln des Teilkonfigurationsdatensatzes in einem Entschlüsselungsmodul Freigeben der Firewall
- S8: Freigeben einer Firewall
- S9: Übertragen des Teilkonfigurationsdatensatzes an eine Rekonfigurationsschnittstelle der feldprogrammierbaren Logikgatter-Anordnung
- S10: Konfigurieren eines Rekonfigurationslogikbereichs der feldprogrammierbaren Logikgatter-Anordnung aus der Rekonfigurationsschnittstelle.
- S11: Abbrechen der Rekonfiguration der feldprogrammierbaren Logikgatter-Anordnung
- S12: Erzeugen einer Fehlermeldung und Aufrechterhalten der Firewall

## Patentansprüche

1. Computerimplementiertes Verfahren zur Authentifizierung eines Konfigurationsdatensatzes (2) einer feldprogrammierbaren Logikgatter-Anordnung (1) mit mehreren Schritten:
- Bereitstellen des Konfigurationsdatensatzes (2) für die feldprogrammierbare Logikgatter-Anordnung (1),
- Zerlegen des Konfigurationsdatensatzes (2) in wenigstens zwei Teile, wobei der erste Teil in einem ersten Teilkonfigurationsdatensatz (21) gespeichert wird und der zweite Teil in einem zweiten Teilkonfigurationsdatensatz (22) gespeichert wird,
- Erzeugen wenigstens eines ersten Integritätswerts (I1) des ersten Teilkonfigurationsdatensatz (21),
- Erzeugen wenigstens eines zweiten Integritätswerts (I2) des zweiten Teilkonfigurationsdatensatzes (22) durch eine kryptographische Prüfsumme abhängig von den vorhergehenden Teilkonfigurationsdatensätzen (21) und/oder den vorhergehenden Integritätswerten (I1),
- Übertragen wenigstens eines der Teilkonfigurationsdatensätze (21, 22) mit dem wenigstens einen zugeordneten Integritätswert (I1, I2) in ein Authentifizierungsmodul (11),
- Ermitteln eines Prüfergebnisses für die Authentizität des wenigstens einen Teilkonfigurationsdatensatzes (21, 22) anhand des wenigstens einen zugeordneten Integritätswerts (I1, I2), wobei das Prüfergebnis durch das Authentifizierungsmodul (11) ermittelt wird.

2. Verfahren nach Anspruch 1, wobei die Teilkonfigurationsdatensätze (21, 22) verschlüsselt werden.

3. Verfahren nach Anspruch 2, wobei ein Verschlüsseln der Teilkonfigurationsdatensätze (21, 22) vor oder nach dem Erzeugen des ersten Integritätswerts (I1), des zweiten Integritätswerts (I2) oder eines nachfolgenden Integritätswerts (I6, I7) erfolgt.

4. Verfahren nach einem der vorhergehenden Ansprüche, wobei bei Vorliegen eines positiven Prüfergebnisses der Authentizität (Y) folgende Schritte durchgeführt werden:
- Entschlüsseln des Teilkonfigurationsdatensatzes (21, 22) in einem Entschlüsselungsmodul (12),
- Übertragen des Teilkonfigurationsdatensatzes (21, 22) an eine Speichereinheit (10) der feldprogrammierbaren Logikgatter-Anordnung (1).

5. Verfahren nach Anspruch 4, wobei nach dem Übertragen ein Laden des Teilkonfigurationsdatensatzes in die feldprogrammierbare Logikgatter-Anordnung (1) mit folgenden Schritten erfolgt:
- Übertragen des Teilkonfigurationsdatensatzes (21, 22) an eine Rekonfigurationsschnittstelle (13) der feldprogrammierbaren Logikgatter-Anordnung (1),
- Konfigurieren eines Rekonfigurationslogikbereichs (15) der feldprogrammierbaren Logikgatter-Anordnung (1) aus der Rekonfigurationsschnittstelle (13).

6. Verfahren nach einem der Ansprüche 4 oder 5, wobei das Entschlüsseln der Teilkonfigurationssätze (21, 22) nach dem Prüfen der Authentizität oder während des Prüfens der Authentizität erfolgen kann.

7. Verfahren nach einem der Ansprüche 5 oder 6, wobei der Rekonfigurationslogikbereich (15) von einer Firewall (16) geschützt wird.

8. Verfahren nach Anspruch 7, wobei der Rekonfigurationslogikbereich (15) nach Prüfen der Authentizität und Anerkennen der Authentizität aller Teilkonfigurationsdatensätze (21, 22) von der Firewall (16) freigegeben wird.

9. Verfahren nach einem der vorhergehenden Ansprüche,
wobei die Prüfung der Authentizität in dem Authentizitätsmodul (11) durch symmetrische kryptographische Verfahren und / oder asymmetrische kryptographische Verfahren durchgeführt wird.

10. Verfahren nach einem der vorhergehenden Ansprüche, wobei das Entschlüsseln in dem Entschlüsselungsmodul (12) durch symmetrische kryptographische Verfahren und / oder asymmetrische kryptographische Verfahren durchgeführt wird.

11. Elektronischer Schaltkreis mit einer feldprogrammierbaren Logikgatter-Anordnung (1) umfassend:
- eine Recheneinheit, die dazu eingerichtet ist, einen Konfigurationsdatensatz (2) in wenigstens zwei Teilkonfigurationsdatensätze (21, 22) aufzuteilen, wenigstens einen ersten Integritätswert (I1) eines ersten Teilkonfigurationsdatensatzes (21) zu erzeugen und wenigstens einen zweiten Integritätswert (I2) eines zweiten Teilkonfigurationsdatensatzes (22) durch eine kryptographische Prüfsumme abhängig von den vorhergehenden Teilkonfigurationsdatensätzen (21) und/oder den Integritätswerten (I1) zu erzeugen;
- ein Authentifizierungsmodul (11), das dazu eingerichtet ist, die Authentizität wenigstens eines Teilkonfigurationsdatensatzes (21, 22) anhand des wenigstens einen zugeordneten Integritätswerts (I1, I2) zu prüfen.

12. Elektronischer Schaltkreis nach Anspruch 11 mit der feldprogrammierbaren Logikgatter-Anordnung (1) umfassend ein Entschlüsselungsmodul (12), das geeignet ist, den Teilkonfigurationsdatensatz (21, 22) vor oder nach dem Prüfen der Authentizität mit einem Ergebnis der anerkannten Authentizität (Y) zu entschlüsseln.

13. Elektronischer Schaltkreis nach einem der Ansprüche 11 oder 12 mit der feldprogrammierbaren Logikgatter-Anordnung (1) umfassend eine Rekonfigurationsschnittstelle (13), wobei ein Rekonfigurationslogikbereich (15) aus der Rekonfigurationsschnittelle (13) beschreibbar ist.

14. Computerprogrammprodukt mit Befehlen, welche bei Ausführung des Datenverarbeitungsprogramms durch eine Datenverarbeitungseinrichtung die Datenverarbeitungseinrichtung dazu veranlassen, ein Verfahren nach einem der Ansprüche 1 bis 10 durchzuführen.

15. Computerlesbares Speichermedium, auf dem ein Datenverarbeitungsprogramm nach Anspruch 14 gespeichert ist.
